# EUROPÄISCHE PATENTSCHRIFT

(11) **EP 3 143 071 B1**
(45) Veröffentlichungstag und Bekanntmachung des Hinweises auf die Patenterteilung: **27.11.2024**
(21) Anmeldenummer: 15715269.5
(22) Anmeldetag: 10.04.2015
(51) Int. Cl.: C08G 77/08, C09J 183/10, C09J 183/12

(54) **VERNETZBARE MASSEN AUF BASIS VON ORGANYLOXYSILANTERMINIERTEN POLYMEREN**
CROSS-LINKABLE MASSES BASED ON ORGANYL-OXYSILANE-TERMINATED POLYMERS
MATIÈRES RÉTICULABLES À BASE DE POLYMÈRES À TERMINAISON ORGANYLOXYSILANE

(30) Priorität: 17.04.2014 DE 102014207506
(43) Veröffentlichungstag der Anmeldung: 22.03.2017
(73) Patentinhaber: Wacker Chemie AG, 81671 München (DE)
(72) Erfinder: STANJEK, Volker, 84539 Ampfing (DE); ZANDER, Lars, 84503 Altötting (DE)
(74) Vertreter: Mieskes, Klaus Theoderich
(86) Internationale Anmeldenummer: PCT/EP2015/057853
(87) Internationale Veröffentlichungsnummer: WO 2015/158624

(56) Entgegenhaltungen:
- DE-A1- 102011 006 130
- DE-A1- 102011 081 264
- DE-A1- 102011 087 604
- DE-A1- 102012 201 734
- US-B2- 6 602 964

## Beschreibung

Die Erfindung betrifft vernetzbare Massen von silanvernetzenden Prepolymeren, Verfahren zu deren Herstellung und deren Verwendung als Kleb- und Dichtstoffe, insbesondere zum Verkleben von Substraten.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. Eine der wichtigsten Anwendungen von derartigen Materialien ist die Herstellung von Klebstoffen.

So zeigen Klebstoffe auf Basis von alkoxysilanvernetzenden Polymeren im ausgehärteten Zustand nicht nur gute Haftungseigenschaften auf einigen Substraten, sondern auch sehr gute mechanische Eigenschaften, da sie sowohl reißfest als auch hochelastisch sein können. Ein weiterer entscheidender Vorteil silanvernetzender Systeme gegenüber zahlreichen anderen Kleb- und Dichtstofftechnologien (z.B. gegenüber isocyanatvernetzenden Systemen) ist die toxikologische Unbedenklichkeit der Prepolymere.

Dabei werden in vielen Anwendungen einkomponentige Systeme (1K-Systeme) bevorzugt, die bei Kontakt mit Luftfeuchtigkeit aushärten. Die entscheidenden Vorteile von einkomponentigen Systemen sind vor allem deren sehr leichte Applizierbarkeit, da hier keine Mischung verschiedener Klebstoffkomponenten durch den Anwender erforderlich ist. Neben der Zeit-/Arbeitsersparnis und der sicheren Vermeidung eventueller Dosierungsfehler, ist bei einkomponentigen Systemen auch nicht die Notwendigkeit gegeben, den Kleb-/Dichtstoff innerhalb eines meist recht engen Zeitfensters zu verarbeiten, wie dies bei mehrkomponentigen Systemen nach erfolgter Durchmischung der beiden Komponenten der Fall ist.

Eine besondere Variante von Klebstoffen auf Basis alkoxysilanvernetzender Polymere ist in DE-A 10 2011 006130 sowie DE-A 10 2011 081264 beschrieben, die neben den silanvernetzenden Polymeren auch noch Phenylsiliconharze enthalten. Die entsprechenden Harzzusätze verbessern nicht nur die Haftung auf zahlreichen verschiedenen Untergründen, sondern führen - insbesondere bei den in DE-A 10 2011 081264 beschriebenen hohen Harzgehalten - auch zu Klebstoffen, die nach ihrer vollständigen Aushärtung eine erheblich verbesserte Härte und Zugscherfestigkeit aufweisen.

Allerdings beschränken sich die im Stand der Technik konkret beschriebenen Systeme auf Materialien, die Polymere mit sogenannten alpha-Alkoxysilangruppen enthalten, bei denen die Alkoxysilylgruppe nur durch eine CH₂-Gruppe von einem Heteroatom getrennt ist. Dieser besondere Polymertyp zeichnet sich durch eine besonders hohe Reaktivität aus, so dass der Einsatz von hochwirksamen Katalysatoren, wie z.B. zinnorganischen Verbindungen, Amidin oder Guanidinderivaten, nicht notwendig ist. Dies ist insofern sehr vorteilhaft, als dass hochwirksame Katalysatoren Austauschreaktionen katalysieren können, bei denen Si-O-Si-Bindungen der zugesetzten Phenylsiliconharze mit den Si-OCH₃-Gruppen der alkoxysilanfunktionellen Polymere reagieren. Durch derartige Austauschreaktionen würden sich Si-O-Si-Bindungen zwischen den alkoxysilanfunktionellen Polymeren bilden, was zu einer drastischen Viskositätserhöhung bis hin zu einer vollständigen Gelierung des Materials führen kann. Die Lagerstabilität der entsprechenden Formulierung wäre nicht mehr gegeben.

Nachteilig an diesen im Stand der Technik beschriebenen Systemen ist allerdings, dass fast alle kommerziell verfügbaren Polymertypen nicht über die erforderlichen hochreaktiven alpha-Alkoxysilangruppen verfügen, sondern stattdessen über sogenannte gamma-Alkoxysilangruppen, bei denen die Alkoxysilaneinheit durch einen (CH₂)₃-Spacer mit dem nächsten Heteroatom verbunden ist. Dies bedeutet eine massive Einschränkung der einzusetzenden Rohstoffbasis, zumal die wenigen kommerziell verfügbaren alpha-alkoxysilanfunktionellen Polymere auch systemische Nachteile wie z.B. herstellungsbedingt vergleichsweise hohe Kosten oder auch vergleichsweise schlechte Rückstellungen aufweisen. Viele Eigenschaftsprofile sind daher mit der bestehenden Technologie nicht darstellbar.

Gegenstand der Erfindung sind vernetzbare Massen enthaltend
(A) 100 Gewichtsteile Verbindungen der Formel

   Y-[(CR¹₂)₃-SiRₐ(OR²)₃₋ₐ]_{b} (I),

   wobei
   Y einen x-wertigen, über Stickstoff, Sauerstoff, Schwefel oder Kohlenstoff gebundenen Polymerrest bedeutet,
   R gleich oder verschieden sein kann und einen einwertigen, gegebenenfalls substituierten Kohlenwasserstoffrest darstellt,
   R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
   R² gleich oder verschieden sein kann und Wasserstoffatom oder einen einwertigen, gegebenenfalls substituierten Kohlenwasserstoffrest darstellt,
   b eine ganze Zahl von 1 bis 10, bevorzugt 1, 2 oder 3, besonders bevorzugt 1 oder 2, ist, und
   a gleich oder verschieden sein kann und 0, 1 oder 2, bevorzugt 0 oder 1, ist,
(B) mindestens 5 Gewichtsteile Siliconharze enthaltend Einheiten der Formel

   R³_{c}(R⁴O)_{d}R⁵SiO_{(4-c-d-e)/2} (II),

   wobei
   R³ gleich oder verschieden sein kann und Wasserstoffatom, einen einwertigen, SiC-gebundenen, gegebenenfalls substituierten aliphatischen Kohlenwasserstoffrest oder einen zweiwertigen, gegebenenfalls substituierten, aliphatischen Kohlenwasserstoffrest, der zwei Einheiten der Formel (II) verbrückt, bedeutet,
   R⁴ gleich oder verschieden sein kann und Wasserstoffatom oder einen einwertigen, gegebenenfalls substituierten Kohlenwasserstoffrest bedeutet,
   R⁵ gleich oder verschieden sein kann und einen einwertigen, SiC-gebundenen, gegebenenfalls substituierten aromatischen Kohlenwasserstoffrest bedeutet,
   c 0, 1, 2 oder 3 ist,
   d 0, 1, 2 oder 3, bevorzugt 0, 1 oder 2, besonders bevorzugt 0 oder 1, ist und
   e 0, 1 oder 2, bevorzugt 0 oder 1, ist,
   mit der Maßgabe, dass
   die Summe aus c+d+e kleiner oder gleich 3 ist und in mindestens 40 % der Einheiten der Formel (II) die Summe c+e gleich 0 oder 1 ist,
(C1) Katalysator ausgewählt aus metallhaltigen Härtungskatalysatoren, Guanidinen und Amidinen, und
(C2) Cokatalysator enthaltend Einheiten der Formel

   DₕSi(OR⁷)_{g}R⁶_{f}O(_{4-f-g-h)/2} (III),

   worin
   R⁶ gleich oder verschieden sein kann und einen einwertigen, gegebenenfalls substituierten SiC-gebundenen, von Stickstoff freien organischen Rest bedeutet,
   R⁷ gleich oder verschieden sein kann und Wasserstoffatom oder gegebenenfalls substituierte Kohlenwasserstoffreste bedeutet,
   D gleich oder verschieden sein kann und einen einwertigen, SiC-gebundenen Rest mit mindestens einem nicht an eine Carbonylgruppe (C=O) gebundenen Stickstoffatom bedeutet,
   f 0, 1, 2 oder 3, bevorzugt 1, ist,
   g 0, 1, 2 oder 3, bevorzugt 1, 2 oder 3, besonders bevorzugt 1 oder 3, ist und
   h 0, 1, 2, 3 oder 4, bevorzugt 1, ist,
   mit der Maßgabe, dass die Summe aus f+g+h kleiner oder gleich 4 ist und pro Molekül mindestens ein Rest D anwesend ist,
   wobei das Molverhältnis von Verbindungen (C1) zu Resten D in Verbindungen (C2) 1:1 bis 1:400 beträgt und die vernetzbaren Massen Komponenten (C1) und (C2) in einer Gesamtmenge von 0,2 bis 50 Gewichtsteilen bezogen auf 100 Gewichtsteile Komponente (A) enthalten.

Der Erfindung liegt die überraschende Entdeckung zugrunde, dass sich durch die Verwendung der erfindungsgemäßen Katalysatorkombination aus Katalysator (C1) und Cokatalysator (C2) Massen auf Basis der erfindungsgemäßen Polymere (A) und Siliconharze (B) erhalten lassen, die sowohl eine hinreichende Lagerstabilität aufweisen als auch bei Kontakt mit der Luftfeuchtigkeit zügig vernetzen und aushärten.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom und Kohlenwasserstoffreste mit 1 bis 20 Kohlenstoffatomen, insbesondere um Wasserstoffatom.

Beispiele für Rest R² sind Wasserstoffatom oder die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- und Ethylrest.

Als Polymere, welche dem Polymerrest Y zugrunde liegen, sind im Sinne der vorliegenden Erfindung alle Polymere zu verstehen, bei denen mindestens 50%, bevorzugt mindestens 70%, besonders bevorzugt mindestens 90%, aller Bindungen in der Hauptkette Kohlenstoff-Kohlenstoff-, Kohlenstoff-Stickstoff- oder Kohlenstoff-Sauerstoff-Bindungen sind.

Beispiele für Polymerreste Y sind Polyester-, Polyether-, Polyurethan-, Polyalkylen- und Polyacrylatreste.

Bei Polymerrest Y handelt es sich bevorzugt um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane; Polyester; Polyamide; Polyacrylate; Polymethacrylate; Vinylpolymer und Polycarbonate enthalten und die vorzugsweise über -O-C(=O)-NH-, -NH-C(=O)O-, -NH-C(=O)-NH-, -NR'-C(=O)-NH-, NH-C(=O)-NR'-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, -NR' - an die Gruppe bzw. Gruppen - [(CR¹₂)₃-SiRₐ(OR²)₃₋ₐ]gebunden sind, wobei R' gleich oder verschieden sein kann und eine für R angegebene Bedeutung hat oder für eine Gruppe -CH(COOR")-CH₂-COOR" steht, in der R" gleich oder verschieden sein kann und eine für R angegebene Bedeutung hat.

Bei Rest R' handelt es sich vorzugsweise um eine Gruppe -CH(COOR")-CH₂-COOR" oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen.

Beispiele für Reste R' sind Cyclohexyl-, Cyclopentyl-, n- und iso-Propyl-, n-, iso- und t-Butyl-, die diversen Stereoisomere des Pentylrests, Hexylrests oder Heptylrests sowie der Phenylrest.

Bei den Resten R" handelt es sich vorzugsweise um Alkylgruppen mit 1 bis 10 Kohlenstoffatomen, besonders bevorzugt um Methyl-, Ethyl- oder Propylreste.

Die Komponente (A) kann dabei die auf die beschriebene Weise angebundenen Gruppen - [(CR¹₂) ₃-SiRₐ(OR²)₃₋ₐ]an beliebigen Stellen im Polymer aufweisen, wie etwa kettenständig und/oder endständig.

Bevorzugt handelt es sich bei Rest Y um Polyurethanreste oder Polyoxyalkylenreste, besonders bevorzugt um kettenförmige Polyurethanreste oder kettenförmige Polyoxyalkylenreste mit jeweils 0 bis 3 Verzweigungsstellen mit endständig angebundenen Gruppen - [(CR¹₂)_{b}-SiRₐ (OR²)₃₋ₐ], wobei als Verzweigungsstellen im Sinne der Erfindung alle Abzweigungen von der Hauptkette mit mehr als einem Kohlenstoffatom zu verstehen sind und die Reste und Indizes die oben genannten Bedeutungen haben.

Insbesondere handelt es sich bei Rest Y in Formel (I) um kettenförmige Polyurethanreste oder kettenförmige Polyoxyalkylenreste ohne Verzweigungsstellen mit endständig angebundenen Gruppen -[(CR¹₂)_{b}-SiRₐ(OR²)_{3-a]}, wobei die Reste und Indizes die oben genannten Bedeutungen haben.

Bei den Polyurethanresten Y handelt es sich bevorzugt um solche, deren Kettenenden über -NH-C(=O)O-, -NH-C(=O)-NH-, -NR'-C(=O)-NH- oder -NH-C(=O)-NR'-, insbesondere über -O-C(=O)-NH- oder -NH-C(=O)-NR'-, an die Gruppe bzw. Gruppen -[(CR¹₂)₃-SiRₐ(OR²)₃₋ₐ] gebunden sind, wobei sämtliche Reste und Indizes eine der o.g. Bedeutungen haben. Die Polyurethanreste Y sind dabei vorzugsweise aus linearen oder verzeigten Polyoxyalkylenen, insbesondere aus Polypropylenglycolen, und Di- oder Polyisocyanaten herstellbar. Die Reste Y weisen dabei vorzugsweise mittlere Molmassen Mₙ (Zahlenmittel) von 400 bis 30 000 g/mol, bevorzugt von 4 000 bis 20 000 g/mol, auf. Geeignete Verfahren zur Herstellung einer entsprechenden Komponente (A) sowie auch Beispiele für die Komponente (A) selbst sind unter anderem in EP 1 093 482 B1 (Absätze [0014]-[0023], [0039]-[0055] sowie Beispiel 1 und Vergleichsbeispiel 1) oder EP 1 641 854 B1 (Absätze [0014]-[0035], Beispiele 4 und 6 sowie die Vergleichsbeispiele 1 und 2) beschrieben, die zum Offenbarungsgehalt der vorliegenden Anmeldung zu zählen sind.

Die zahlenmittlere Molmasse Mₙ wird dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 ul zu bestimmen.

Bei den Polyoxyalkylenresten Y handelt es sich bevorzugt um lineare oder verzweigte Polyoxyalkylenreste, besonders bevorzugt um Polyoxypropylenreste, deren Kettenenden vorzugsweise über -O-C(=O)-NH- oder -O- an die Gruppe bzw. Gruppen -[(CR¹₂)₃-SiRₐ(OR²)₃₋ₐ] gebunden sind, wobei die Reste und Indizes eine der oben genannten Bedeutungen haben. Vorzugsweise sind dabei mindestens 85%, besonders bevorzugt mindestens 90%, insbesondere mindestens 95%, aller Kettenenden über -O-C(=O)-NH- an die Gruppe - [(CR¹₂)₃-SiRₐ(OR²)₃₋ₐ] gebunden. Die Polyoxyalkylenreste Y weisen vorzugsweise mittlere Molmassen Mₙ von 4 000 bis 30 000 g/mol, bevorzugt von 8 000 bis 20 000 g/mol, auf. Geeignete Verfahren zur Herstellung einer entsprechenden Komponente (A) sowie auch Beispiele für die Komponente (A) selbst sind unter anderem in EP 1 535 940 B1 (Absätze [0005]-[0025] sowie Beispiele 1-3 und Vergleichsbeispiel 1-4) oder EP 1 896 523 B1 (Absätze [0008]-[0047]) beschrieben, die zum Offenbarungsgehalt der vorliegenden Anmeldung zu zählen sind.

Bei den Endgruppen der erfindungsgemäß eingesetzten Verbindungen (A) handelt es sich vorzugsweise um solche der allgemeinen Formeln

-NH-C (=O)-NR'- (CR¹₂)₃-SiRₐ(OR²)₃₋ₐ (IV),

-O-C(=O) -NH- (CR¹₂)₃-SiRₐ(OR²)₃₋ₐ (V)

oder

-O- (CR¹₂)₃-SiRₐ(OR²)₃₋ₐ (VI),

wobei die Reste und Indizes eine der oben dafür angegebenen Bedeutungen haben.

Sofern es sich bei den Verbindungen (A), was bevorzugt ist, um Polyurethane handelt, weisen diese vorzugsweise eine oder mehrere der folgenden Endgruppen

-NH-C (=O) -NR'- (CH₂)₃-Si(OCH₃)₃,

-NH-C (=O)-NR'- (CH₂)₃-Si(OC₂H₅)₃,

-O-C(=O)-NH- (CH₂)₃-Si(OCH₃)₃ oder

-O-C(=O)-NH- (CH₂)₃-Si(OC₂H₅)₃ auf,

wobei R' die oben genannte Bedeutung aufweist.

Sofern es sich bei den Verbindungen (A), was ebenfalls bevorzugt ist, um Polypropylenglycole handelt, weisen diese vorzugsweise eine oder mehrere der folgenden Endgruppen

-O- (CH₂)₃-Si(CH₃)(OCH₃)₂,

-O-(CH₂)₃-Si(OCH₃)₃,

-O-C(=O)-NH-(CH₂)₃-Si(OC₂H₅)₃,

-O-C(=O)-NH-(CH₂)₃-Si(OCH₃)₃ oder

-O-C(=O)-NH-(CH₂)₃-Si(CH₃)(OCH₃)₂ auf.

Die mittleren Molekulargewichte Mₙ der Verbindungen (A) betragen vorzugsweise mindestens 400 g/mol, besonders bevorzugt mindestens 4 000 g/mol, insbesondere mindestens 10 000 g/mol und vorzugsweise höchstens 30 000 g/mol, besonders bevorzugt höchstens 20 000 g/mol, insbesondere höchstens 19 000 g/mol.

Die Viskosität der Verbindungen (A) beträgt vorzugsweise mindestens 0,2 Pas, bevorzugt mindestens 1 Pas, besonders bevorzugt mindestens 5 Pas, und vorzugsweise höchstens 700 Pas, bevorzugt höchstens 100 Pas, jeweils gemessen bei 20°C.

Die Viskosität wird im Rahmen der vorliegenden Erfindung nach einer Temperierung auf 23°C mit einem DV 3 P-Rotationsviskosimeter von Fa. A. Paar (Brookfieldsysteme), unter Verwendung von Spindel 5 bei 2,5 UPM entsprechend der ISO 2555 zu bestimmen.

Die erfindungsgemäß eingesetzten Verbindungen (A) sind handelsübliche Produkte oder können nach in der Chemie gängigen Verfahren hergestellt werden.

Die Herstellung der Polymere (A) kann durch bekannte Verfahren erfolgen, wie Additionsreaktionen, wie z.B. der Hydrosilylierung, Michael-Addition, Diels-Alder-Addition oder Reaktionen zwischen isocyanatfunktionellen Verbindungen mit Verbindungen, die isocyanatreaktive Gruppen aufweisen.

Die erfindungsgemäß eingesetzte Komponente (A) kann nur eine Art von Verbindung der Formel (I) enthalten wie auch Gemische unterschiedlicher Arten von Verbindungen der Formel (I). Dabei kann die Komponente (A) ausschließlich Verbindungen der Formel (I) enthalten, in denen mehr als 90%, bevorzugt mehr als 95% und besonders bevorzugt mehr als 98% aller an den Rest Y gebundenen Silylgruppen identisch sind. Es kann dann aber auch eine Komponente (A) eingesetzt werden, die zumindest zum Teil Verbindungen der Formel (I) enthält, bei denen an einen Rest Y unterschiedliche Silylgruppen gebunden sind. Schließlich können als Komponente (A) auch Gemische verschiedener Verbindungen der Formel (I) eingesetzt werden, in denen insgesamt mindestens 2 unterschiedliche Arten von an Reste Y gebundene Silylgruppen vorhanden sind, wobei jedoch sämtliche an jeweils einen Rest Y gebundenen Silylgruppen identisch sind.

Vorzugsweise enthalten die erfindungsgemäßen Massen Verbindungen (A) in Konzentrationen von höchstens 60 Gew.-%, besonders bevorzugt höchstens 40 Gew.-% und vorzugsweise mindestens 10 Gew.-%, besonders bevorzugt mindestens 15 Gew.-%.

Bezogen auf 100 Gewichtsteile der Komponente (A) enthalten die erfindungsgemäßen Massen vorzugsweise mindestens 10 Gewichtsteile, besonders bevorzugt mindestens 15 Gewichtsteile, Komponente (B). Bezogen auf 100 Gewichtsteile der Komponente (A) enthalten die erfindungsgemäßen Massen vorzugsweise höchstens 200 Gewichtsteile, besonders bevorzugt höchstens 60 Gewichtsteile, insbesondere höchstens 50 Gewichtsteile, Komponente (B) .

Komponente (B) besteht vorzugsweise zu mindestens 90 Gew.-% aus Einheiten der Formel (II). Besonders bevorzugt besteht Komponente (B) bzw. (B1) ausschließlich aus Einheiten der Formel (II).

Beispiele für Reste R³ sind die oben für R angegebenen aliphatischen Beispiele. Es kann sich bei Rest R³ aber auch um zweiwertige aliphatische Reste handeln, die zwei Silylgruppen der Formel (II) miteinander verbinden, wie z.B. Alkylenreste mit 1 bis 10 Kohlenstoffatomen, wie etwa Methylen-, Ethylen-, Propylen- oder Butylenreste. Ein besonders gängiges Beispiel für einen zweiwertigen aliphatischen Rest stellt der Ethylenrest dar. Bevorzugt handelt es sich bei Rest R³ jedoch um gegebenenfalls mit Halogenatomen substituierte, einwertige SiC-gebundene aliphatische Kohlenwasserstoffreste mit 1 bis 18 Kohlenstoffatomen, besonders bevorzugt um aliphatische Kohlenwasserstoffreste mit 1 bis 6 Kohlenstoffatomen, insbesondere um den Methylrest.

Beispiele für Rest R⁴ sind Wasserstoffatom oder die für Rest R angegebenen Beispiele.

Bevorzugt handelt es sich bei Rest R⁴ um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- und Ethylrest.

Beispiele für Reste R⁵ sind die oben für R angegebenen aromatischen Reste.

Bevorzugt handelt es sich bei Rest R⁵ um gegebenenfalls mit Halogenatomen substituierte, SiC-gebundene aromatische Kohlenwasserstoffreste mit 1 bis 18 Kohlenstoffatomen, wie z.B. Ethylphenyl-, Toluyl-, Xylyl-, Chlorphenyl-, Naphtyl- oder Styrylreste, besonders bevorzugt um den Phenylrest.

Bevorzugt werden als Komponente (B) Siliconharze eingesetzt, in denen mindestens 90% aller Reste R³ für Methylrest stehen.

Bevorzugt werden als Komponente (B) Siliconharze eingesetzt, in denen mindestens 90% aller Reste R⁴ für Methyl-, Ethyl-, Propyl- oder Isopropylrest stehen.

Bevorzugt werden als Komponente (B) Siliconharze eingesetzt, in denen mindestens 90% aller Reste R⁵ für Phenylrest stehen.

Vorzugsweise werden erfindungsgemäß Siliconharze (B) eingesetzt, die mindestens 20%, besonders bevorzugt mindestens 40%, Einheiten der Formel (II) aufweisen, in denen c gleich 0 ist, jeweils bezogen auf die Gesamtzahl an Einheiten der Formel (II) .

Vorzugsweise werden Siliconharze (B) eingesetzt, die, jeweils bezogen auf die Gesamtzahl an Einheiten der Formel (II), mindestens 70%, besonders bevorzugt mindestens 80%, Einheiten der Formel (II) aufweisen, in denen d für den Wert 0 oder 1 steht.

Vorzugsweise werden als Komponente (B) Siliconharze (B1) eingesetzt, die, jeweils bezogen auf die Gesamtzahl an Einheiten der Formel (II), mindestens 20%, besonders bevorzugt mindestens 40%, insbesondere mindestens 50%, Einheiten der Formel (II) aufweisen, in denen e für den Wert 1 steht.

In einer besonderen Ausführungsform der Erfindung werden Siliconharze (B1) eingesetzt, die ausschließlich Einheiten der Formel (II) aufweisen, in denen e gleich 1 ist,

In einer besonders bevorzugten Ausführung der Erfindung werden als Komponente (B1) Siliconharze eingesetzt, die, jeweils bezogen auf die Gesamtzahl an Einheiten der Formel (II), mindestens 20%, besonders bevorzugt mindestens 40%, insbesondere mindestens 50%, Einheiten der Formel (II) aufweisen, in denen e für den Wert 1 und c für den Wert 0 stehen.

Beispiele für die erfindungsgemäß eingesetzten Siliconharze (B) sind Organopolysiloxanharze, die im Wesentlichen, vorzugsweise ausschließlich, aus Einheiten bestehen, ausgewählt aus (Q)-Einheiten der Formeln SiO_{4/2}, Si (OR⁴)O_{3/2}, Si (OR⁴)₂O_{2/2} und Si (OR⁴)₃O_{1/2}, (T)-Einheiten der Formeln PhSiO_{3/2}, PhSi (OR⁴)O_{2/2} und PhSi (OR⁴)₂O_{4/2}, (D)-Einheiten der Formeln Me₂SiO_{2/2} und Me₂Si (OR⁴)O_{1/2} sowie (M) -Einheiten der Formel Me₃SiO_{1/2}, wobei Me für Methylrest, Ph für Phenylrest und R⁴ für Wasserstoffatom oder gegebenenfalls mit Halogenatomen substituierte Alkylreste mit 1 bis 10 Kohlenstoffatomen, bevorzugt für unsubstituierte Alkylreste mit 1 bis 4 Kohlenstoffatomen, stehen, wobei das Harz pro Mol (T)-Einheiten bevorzugt 0-2 Mol (Q)-Einheiten, 0-2 Mol (D)-Einheiten und 0-2 Mol (M)-Einheiten enthält.

Bevorzugte Beispiele für die erfindungsgemäß eingesetzten Siliconharze (B) sind Organopolysiloxanharze, die im Wesentlichen, vorzugsweise ausschließlich, aus Einheiten bestehen, ausgewählt aus T-Einheiten der Formeln PhSiO_{3/2}, PhSi (OR⁴)O_{2/2} und PhSi(OR⁴)₂O_{1/2} sowie T-Einheiten der Formeln MeSiO_{3/2}, Me-Si(OR⁴)O_{2/2} und MeSi(OR⁴)₂O_{1/2}, wobei Me für Methylrest, Ph für Phenylrest und R⁴ für Wasserstoffatom oder gegebenenfalls mit Halogenatomen substituierte Alkylreste mit 1 bis 10 Kohlenstoffatomen, bevorzugt für unsubstituierte Alkylreste mit 1 bis 4 Kohlenstoffatomen, stehen.

Weitere bevorzugte Beispiele für die erfindungsgemäß eingesetzten Siliconharze (B) sind Organopolysiloxanharze, die im Wesentlichen, vorzugsweise ausschließlich, aus Einheiten bestehen, ausgewählt aus T-Einheiten der Formeln PhSiO_{3/2}, PhSi(OR⁴)O_{2/2} und PhSi(OR⁴)₂O_{1/2}, T-Einheiten der Formeln MeSiO_{3/2}, MeSi (OR⁴)O_{2/2} und MeSi (OR⁴)₂O_{1/2} sowie D-Einheiten der Formeln Me₂SiO_{2/2} und Me₂Si(OR⁴)O_{1/2}, wobei Me für Methylrest, Ph für Phenylrest und R⁴ für Wasserstoffatom oder gegebenenfalls mit Halogenatomen substituierte Alkylreste mit 1 bis 10 Kohlenstoffatomen, bevorzugt für unsubstituierte Alkylreste mit 1 bis 4 Kohlenstoffatomen, stehen, mit einem molaren Verhältnis von Phenylsilicon- zu Methylsilicon-Einheiten von 0,5 bis 4,0. Der Gehalt an D-Einheiten in diesen Siliconharzen liegt vorzugsweise unter 10 Gew.-%.

Besonders bevorzugte Beispiele für die erfindungsgemäß eingesetzten Siliconharze (B1) sind Organopolysiloxanharze, die zu 80%, vorzugsweise zu 90%, insbesondere ausschließlich, aus T-Einheiten der Formeln PhSiO_{3/2}, PhSi (OR⁴)O_{2/2} und/oder PhSi (OR⁴)₂O_{1/2} bestehen, wobei Ph für Phenylrest und R⁴ für Wasserstoffatom oder gegebenenfalls mit Halogenatomen substituierte Alkylreste mit 1 bis 10 Kohlenstoffatomen, -bevorzugt für unsubstituierte Alkylreste mit 1 bis 4 Kohlenstoffatomen, stehen, jeweils bezogen auf die Gesamtzahl an Einheiten.

Vorzugsweise besitzen die erfindungsgemäß eingesetzten Siliconharze (B) eine mittlere Molmasse (Zahlenmittel) Mₙ von mindestens 400 g/mol und besonders bevorzugt von mindestens 600 g/mol. Die mittlere Molmasse Mₙ liegt vorzugsweise bei höchstens 400 000 g/mol, besonders bevorzugt bei höchstens 10 000 g/mol, insbesondere bei höchstens 3 000 g/mol.

Die erfindungsgemäß eingesetzten Siliconharze (B) können bei 23°C und 1000 hPa sowohl fest als auch flüssig sein, wobei Siliconharze (B) bevorzugt flüssig sind. Vorzugsweise besitzen die Siliconharze (B) eine Viskosität von 10 bis 100 000 mPas, vorzugsweise von 50 bis 50 000 mPas, insbesondere von 100 bis 20 000 mPas.

Die Siliconharze (B) besitzen vorzugsweise ein Polydispersität (M_{w}/Mₙ) von maximal 5, bevorzugt von maximal 3.

Die massenmittlere Molmasse M_{w} wird dabei ebenso wie die zahlenmittlere Molmassen Mₙ mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Die Siliconharze (B) können sowohl in reiner Form als auch in Form einer Mischung in einem geeigneten Lösungsmittel (BL) eingesetzt werden.

Als Lösungsmittel (BL) können dabei sämtliche bei Raumtemperatur gegenüber den Komponenten (A) und (B) nicht reaktive Verbindungen mit einem Siedepunkt <250°C bei 1013 mbar eingesetzt werden.

Beispiele für Lösungsmittel (BL) sind Ether (z.B. Diethylether, Methyl-t-butylether, Etherderivate des Glycols, THF), Ester (z.B. Ethylacetat, Butylacetat, Glycolester), aliphatische Kohlenwasserstoffe (z.B. Pentan, Cyclopentan, Hexan, Cyclohexan, Heptan, Octan oder auch längerkettige verzweigte und unverzweigte Alkane), Ketone (z.B. Aceton, Methylethylketon), Aromaten (z.B. Toluol, Xylol, Ethylbenzol, Chlorbenzol) oder auch Alkohole (z.B. Methanol, Ethanol, Glycol, Propanol, isoPropanol, Glycerin, Butanol, iso-Butanol, t-Butanol).

Viele kommerziell erhältlichen Harze (B1) wie z.B. die Harze SILRES^{®} SY 231, SILRES^{®} IC 231 , SILRES^{®} IC 368 oder SILRES^{®} IC 678 der Fa. Wacker Chemie AG (D-München) sind zwar bei 23°C und 1013 hPa flüssig, enthalten herstellungsbedingt aber dennoch kleine Mengen Lösungsmittel (BL), insbesondere Toluol. So enthalten die oben genannten Harze etwa 0,1 Gew.-% Toluol, bezogen auf das Gesamtgewicht des Harzes.

In einer bevorzugten Ausführung der Erfindung werden als Komponente (B) Komponente (B1) eingesetzt, die weniger als 0,1 Gew.-%, bevorzugt weniger als 0,05 Gew.-%, besonders bevorzugt weniger als 0,02 Gew.-%, insbesondere weniger als 0,01 Gew.-%, aromatische Lösungsmittel (BL) enthalten.

In einer besonders bevorzugten Ausführung der Erfindung werden als Komponente (B) Komponente (B1) eingesetzt, die mit Ausnahme von Alkoholen R⁴OH weniger als 0,1 Gew.-%, bevorzugt weniger als 0,05 Gew.-%, besonders bevorzugt weniger als 0,02 Gew.-%, insbesondere weniger als 0,01 Gew.-% Lösungsmittel (BL) enthalten, wobei R⁴ die oben genannte Bedeutung aufweist.

In einer ganz besonders bevorzugten Ausführung der Erfindung werden als Komponente (B) Harze (B1) eingesetzt, die mit Ausnahme von Alkoholen R⁴OH überhaupt keine Lösungsmittel (BL) enthalten mit R⁴ gleich der oben genannten Bedeutung, wobei Alkohole R⁴OH herstellungsbedingt in Mengen von bevorzugt bis zu 10 Gew.-%, besonders bevorzugt bis zu 5 Gew.-%, enthalten sein können.

Bei den erfindungsgemäß eingesetzten Siliconharzen (B) bzw. (B1) handelt es sich um handelsübliche Produkte oder können nach in der Siliciumchemie gängigen Methoden hergestellt werden.

Vorzugsweise werden die als bevorzugt bzw. besonders bevorzugt beschriebenen Verbindungen (A) in Kombination mit Harzen (B1) in den genannten Mengenverhältnissen eingesetzt.

Bei den in den erfindungsgemäßen Massen eingesetzten Katalysatoren (C1) kann es sich um beliebige, bisher bekannte metallhaltige Härtungskatalysatoren, Guanidine und Amidine handeln.

Bevorzugt handelt es sich bei den erfindungsgemäß eingesetzten metallhaltigen Härtungskatalysatoren (C1) um organische Titanverbindungen und Zinnverbindungen.

Beispiele für die metallhaltige Härtungskatalysatoren (C1) sind Titansäureester, wie Tetrabutyltitanat, Tetrapropyltitanat, Tetraisopropyltitanat und Titantetraacetylacetonat; Organozinnverbindungen, wie Dibutylzinndilaurat, Dibutylzinndimaleat, Dibutylzinndiacetat, Dibutylzinndioctanoat, Dibutylzinnacetylacetonat, Dibutylzinnoxide, Dibutylzinn-ethylhexanolat, Dibutylzinndistearat, Dioctylzinndilaurat, Dioctylzinnmaleat, Dioctylzinndiacetat, Dioctylzinndioctanoat, Dioctylzinnacetylacetonat, Dioctylzinnoxide, Dioctylzinn-ethylhexanolat oder Dioctylzinndistearat, Zinn(II)-Salze, insbesondere Zinn(II)carboxylate.

Weiterhin kann es sich bei den erfindungsgemäßen eingesetzten Katalysatoren (C1) um Amidine wie 1,5-Diazabicyclo[4.3.0]non-5-en (DBN) und 1,8-Diazabicyclo[5.4.0]undec-7-en (DBU) oder Guanidine, wie 1,3-Diphenylguanidin, 1,1,2-Trimethylguanidin, 1,2,3-Trimethylguanidin, 1,1,3,3-Tetramethylguanidin, 1,1,2,3,3-Pentamethylguanidin, 2-Ethyl-1,1,3,3-tetramethylguanidin, 2-Butyl-1,1,3,3-tetramethylguanidin und 1,5,7-triazabi-cyclo[4.4.0]dec-5-en sowie die verschiedenen 7-Alkyl-1,5,7-tri-azabicyclo[4.4.0]dec-5-en-Derivate handeln.

Bevorzugt handelt es sich bei den erfindungsgemäß eingesetzten Katalysatoren (C1) um titanhaltige Verbindungen, zinnhaltige Verbindungen, Amidine und Guanidine, besonders bevorzugt um zinnhaltige Verbindungen, Amidine und Guanidine, insbesondere um zinnhaltige Verbindungen.

Die erfindungsgemäß einzusetzenden Katalysatoren (C1) sind handelsübliche Produkte.

Bei den in den erfindungsgemäßen Massen eingesetzten Cokatalysatoren (C2) kann es sich sowohl um Silane handeln, d.h. Verbindungen der Formel (III) mit f+g+h=4, als auch um Siloxane, d.h. Verbindungen enthaltend Einheiten der Formel (III) mit f+g+h≤3, wobei es sich bevorzugt um Silane handelt.

Beispiele für Rest R⁶ sind die für R angegebenen Beispiele.

Bei Rest R⁶ handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für gegebenenfalls substituierte Kohlenwasserstoffreste R⁷ sind die für Rest R angegebenen Beispiele.

Bei den Resten R⁷ handelt es sich vorzugsweise um Wasserstoffatom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Methyl- und Ethylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH(CH₂)₃-, H₂N(CH₂)₄-, H₂N-CH₂-CH(CH3)-CH₂-, H₂N(CH₂)₅-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, (C₃H₇)₂N(CH₂)₃-, (C₄H₉)₂N(CH₂)₃-, (C₅H₁₁)₂N(CH₂)₃-, (C₆H₁₃)₂N(CH₂)₃-, (C₇H₁₅)₂N(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)-, C₆H₁₃NH(CH₂)-, C₇H₁₅NH(CH₂)-, cyclo-C₅H₉NH(CH₂)-, cyclo-C₆H₁₁NH(CH₂)-, Phenyl-NH(CH₂)-, (CH₃)₂N(CH₂)-, (C₂H₅)₂N(CH₂)-, (C₃H₇)₂N(CH₂)-, (C₄H₉)₂N(CH₂)-, (C₅H₁₁)₂N(CH₂)-, (C₆H₁₃)₂N(CH₂) (C₇H₁₅)₂N(CH₂)-, (CH₃O)₃Si(CH₂)₃NH(CH₂)₃-, (C₂H₅O)₃Si(CH₂)₃NH(CH₂)₃-, (CH₃O)₂(CH₃)Si (CH₂)₃NH(CH₂)₃- und (C₂H₅O)₂(CH₃)Si (CH₂)₃NH(CH₂)₃- sowie Umsetzungsprodukte der obengenannten primären Aminogruppen mit Verbindungen, die gegenüber primären Aminogruppen reaktive Doppelbindungen oder Epoxidgruppen enthalten.

Bevorzugt handelt es sich bei Rest D um den H₂N(CH₂)₃-, H₂N(CH₂)₂NH(CH₂)₃- und cyclo-C₆H₁₁NH(CH₂)₃-Rest.

Beispiele für die erfindungsgemäß gegebenenfalls eingesetzten Silane der Formel (III) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH) ₃, cyclo-C₆H₁₁NH(CH₂)₃-Si(OH) ₂CH₃, Phenyl-NH (CH₂)₃-Si(OCH₃)₃, Phenyl-NH (CH₂)₃-Si(OC₂H₅)₃, Phenyl-NH (CH₂)₃-Si(OCH₃)₂CH₃, Phenyl-NH (CH₂)₃-Si(OC₂H₅) ₂CH₃, Phenyl-NH (CH₂)₃-Si(OH)₃, Phenyl-NH(CH₂)₃-Si(OH)₂CH₃, HN((CH₂)₃-Si(OCH₃)₃)₂, HN ((CH₂)₃-Si(OC₂H₅)₃)₂ HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si (OC₂H₅)₃, cyclo-C₆H₁₁NH(CH₂)-Si (OCH₃)₂CH₃, cyclo-C₆H₁₁NH(CH₂)-Si (OC₂H₅)₂CH₃, cyclo-C₆H₁₁NH(CH₂)-Si (OH)₃, cyclo-C₆H₁₁NH(CH₂)-Si (OH)₂CH₃, Phenyl-NH (CH₂)-Si (OCH₃)₃, Phenyl-NH (CH₂)-Si (OC₂H₅)₃, Phenyl-NH (CH₂)-Si (OCH₃)₂CH₃, Phenyl-NH(CH₂)-Si(OC₂H₅)₂CH₃, Phenyl-NH (CH₂)-Si (OH)₃ und Phenyl-NH(CH₂)-Si(OH)₂CH₃ sowie deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OC₂H₅)₃ und cyclo-C₆H₁₁NH(CH₂)₃-Si(OCH₃)₂CH₃ sowie jeweils deren Teilhydrolysate bevorzugt und H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OCH₃)₂CH₃ sowie jeweils deren Teilhydrolysate besonders bevorzugt sind.

Die erfindungsgemäß eingesetzten Cokatalysatoren (C2) sind handelsübliche Produkte bzw. nach in der Chemie gängigen Verfahren herstellbar.

In den erfindungsgemäßen Massen beträgt das Molverhältnis der Verbindungen (C1) zu Resten D in Verbindung (C2) bevorzugt 1:2 bis 1:200, besonders bevorzugt 1:3 bis 1:100, insbesondere 1:10 bis 1:80.

Die erfindungsgemäßen vernetzbaren Massen enthalten Komponenten (C1) und (C2) in einer Gesamtmenge von bevorzugt von 0,3 bis 35 Gewichtteilen, besonders bevorzugt von 0,6 bis 30 Gewichtsteilen, jeweils bezogen auf 100 Gewichtsteile Komponente (A).

Zusätzlich zu den eingesetzten Komponenten (A), (B), (C1) und (C2) können die erfindungsgemäßen Massen alle weiteren Stoffe enthalten, die auch bisher in vernetzbaren Massen eingesetzt wurden und die unterschiedlich sind zu Komponenten (A), (B), (C1) und (C2), wie z.B. nicht reaktive Weichmacher (D), Füllstoffe (E), Haftvermittler (F), Wasserfänger (G), Additive (H) und Zuschlagstoffe (I).

Als nicht reaktive Weichmacher (D) im Rahmen der vorliegenden Erfindung gelten sämtliche organische Verbindungen, die bei Temperaturen <80°C weder mit Wasser noch mit den Komponenten (A), (B), (C1) und (C2) reagieren, bei 20°C und 1013 hPa flüssig sind, einen Siedepunkt >250°C bei 1013 hPa aufweisen und ausgewählt sind aus den Stoffgruppen bestehend aus
- vollständig veresterten aromatischen oder aliphatischen Carbonsäuren,
- vollständig veresterten Derivaten der Phosphorsäure,
- vollständig veresterten Derivaten der Sulfonsäuren,
- verzweigten oder unverzweigten gesättigten Kohlenwasserstoffen,
- Polystyrolen,
- Polybutadienen,
- Polyisobutylenen,
- Polyestern und
- Polyethern.

Beispiele für Carbonsäureester (D) sind Phthalsäureester, wie z.B. Dioctylphthalat, Diisooctylphthalat und Diundecylphthalat; perhydrierte Phthalsäureester, wie z.B. 1,2-Cyclohexandicarbonsäurediisononylester und 1,2-Cyclohexandicarbonsäuredioctylester; Adipinsäureester, wie z.B. Dioctyladipat; Benzoesäureester; Ester der Trimellitsäure, Glycolester; Ester gesättigter Alkandiole, wie z.B. 2,2,4-Trimethyl-1,3-pentandiolmonoisobuty-rate und 2,2,4-Trimethyl-1,3-pentandioldiisobutyrate.

Beispiele für Polyether (D) sind Polyethylenglycole, Poly-THF und Polypropylenglycole mit Molmassen von vorzugsweise 200 bis 20 000 g/mol.

Bevorzugt werden Weichmacher (D) mit Molmassen, bzw. im Falle polymerer Weichmacher mittlerer Molmassen Mₙ, von mindestens 200 g/mol, besonders bevorzugt von größer 500 g/mol, insbesondere von größer 900 g/mol, eingesetzt. Vorzugsweise besitzen sie Molmassen bzw. mittlere Molmassen Mₙ von maximal 20 000 g/mol, besonders bevorzugt von maximal 10 000 g/mol, insbesondere höchstens 8 000 g/mol.

Bevorzugt werden als Komponente (D) phthalsäureesterfreie Weichmacher, wie perhydrierte Phthalsäureester, Ester der Trimellitsäure, Polyester oder Polyether, eingesetzt.

Besonders bevorzugt handelt es sich bei Weichmacher (D) um Polyether, insbesondere um Polyethylenglycole, Poly-THF und Polypropylenglycole, ganz besonders bevorzugt um Polypropylenglycole. Die bevorzugten Polyether (D) weisen dabei Molmassen vorzugsweise zwischen 400 und 20 000 g/mol, besonders bevorzugt zwischen 800 und 12 000 g/mol, insbesondere zwischen 1 000 und 8 000 g/mol, auf.

Falls die erfindungsgemäßen Massen Weichmacher (D) enthalten, handelt es sich um Mengen von vorzugsweise 5 bis 300 Gewichtsteilen, besonders bevorzugt 10 bis 150 Gewichtsteilen, insbesondere 26 bis 100 Gewichtsteilen, jeweils bezogen auf 100 Gewichtsteile Komponente (A). Die erfindungsgemäßen Massen enthalten bevorzugt Weichmacher (D).

Bei den in den erfindungsgemäßen Massen gegebenenfalls eingesetzten Füllstoffen (E) kann es sich um beliebige, bisher bekannte Füllstoffe handeln.

Beispiele für Füllstoffe (E) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberflächen; Aluminiumtrihydroxid, hohlkugelförmiger Füllstoffe, wie keramische Mikrokugel, elastische Kunststoffkugeln, Glaskugeln oder faserförmige Füllstoffe. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt handelt es sich bei den gegebenenfalls eingesetzten Füllstoffen (E) um Calciumcarbonat, Talkum, Aluminiumtrihydroxid sowie Kieselsäure. Bevorzugte Calciumcarbonat-Typen sind gemahlen oder gefällt und gegebenenfalls oberflächenbehandelt mit Fettsäuren wie Stearinsäure oder deren Salze. Bei der bevorzugten Kieselsäure handelt es sich bevorzugt um pyrogene Kieselsäure.

Gegebenenfalls eingesetzte Füllstoffe (E) haben einen Feuchtigkeitsgehalt von bevorzugt unter 1 Gew.-%, besonders bevorzugt von unter 0,5 Gew.-%.

Falls die erfindungsgemäßen Massen Füllstoffe (E) enthalten, handelt es sich um Mengen von vorzugsweise 10 bis 2000 Gewichtsteilen, besonders bevorzugt 40 bis 1000 Gewichtsteilen, insbesondere 80 bis 500 Gewichtsteilen, jeweils bezogen auf 100 Gewichtsteile Bestandteil (A). Die erfindungsgemäßen Massen enthalten bevorzugt Füllstoffe (E).

In einer besonders bevorzugten Ausführung der Erfindung enthalten die erfindungsgemäßen Massen als Füllstoffe (E) eine Kombination aus
a) Kieselsäure, insbesondere pyrogene Kieselsäure, und
b) Calciumcarbonat, Aluminiumtrihydroxid und/oder Talkum.

Falls die erfindungsgemäßen Massen diese besonders bevorzugte Kombination verschiedener Füllstoffe (E) enthalten, enthalten sie vorzugsweise 1 bis 50 Gewichtsteile, besonders bevorzugt 5 bis 20 Gewichtsteile, Kieselsäure, insbesondere pyrogene Kieselsäure, und vorzugsweise 10 bis 500 Gewichtsteile, besonders bevorzugt 50 bis 300 Gewichtsteile, Calciumcarbonat, Aluminiumtrihydroxid, Talkum oder Mischungen aus diesen Materialien, jeweils bezogen auf 100 Gewichtsteile Bestandteil (A).

In einer weiteren besonders bevorzugten Ausführung der Erfindung enthalten die erfindungsgemäßen Massen als Füllstoffe (E) ausschließlich Calciumcarbonat, Aluminiumtrihydroxid und/oder Talkum in Mengen von vorzugsweise insgesamt 10 bis 500 Gewichtsteilen, besonders bevorzugt 50 bis 300 Gewichtsteilen, jeweils bezogen auf 100 Gewichtsteile Bestandteil (A).

Bei den in den erfindungsgemäßen Massen gegebenenfalls eingesetzten Haftvermittlern (F) kann es sich um beliebige, bisher für durch Silankondensation härtende Systeme beschriebene Haftvermittler handeln.

Beispiele für Haftvermittler (F) sind Epoxysilane, wie Glycidoxypropyltrimethoxysilane, Glycidoxypropyl-methyldimethoxysilan, Glycidoxypropyltriethoxysilan oder Glycidoxypropyl-methyldiethoxysilan, 2-(3-Triethoxysilylpropyl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyl-dimethoxysilylmethyl)-harnstoff, N-(3-Triethoxysilylmethyl)-harnstoff, N-(3-Methyldiethoxysilylmethyl)harnstoff, O-Methylcarbamatomethyl-methyldimethoxysilan, O-Methylcarbamatomethyltrimethoxysilan, O-Ethylcarbamatomethyl-methyldiethoxysilan, o-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethoxysilan, Acryloxymethyl-trimethoxysilan, Acryloxymethylmethyldimethoxysilane, Acryloxymethyl-triethoxysilan und Acryloxymethyl-methyldiethoxysilan sowie deren Teilkondensate.

Falls die erfindungsgemäßen Massen Haftvermittler (F) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile vernetzbare Masse.

Bei den in den erfindungsgemäßen Massen gegebenenfalls eingesetzten Wasserfängern (G) kann es sich um beliebige, für durch Silankondensation härtende Systeme beschriebene Wasserfänger handeln.

Beispiele für Wasserfänger (G) sind Silane wie Vinyltrimethoxysilan, Vinyltriethoxysilan, Vinylmethyldimethoxysilan, Tetraethoxysilan, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, und/oder deren Teilkondensate sowie Orthoester, wie 1,1,1-Trimethoxyethan, 1,1,1-Triethoxyethan, Trimethoxymethan und Triethoxymethan, wobei Vinyltrimethoxysilan bevorzugt ist.

Falls die erfindungsgemäßen Massen Wasserfänger (G) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile vernetzbare Masse. Die erfindungsgemäßen Massen enthalten bevorzugt Wasserfänger (G).

Bei den in den erfindungsgemäßen Massen gegebenenfalls eingesetzten Additiven (H) kann es sich um beliebige, bisher bekannte, für silanvernetzende Systeme typische Additive handeln.

Bei den erfindungsgemäß gegebenenfalls eingesetzten Additiven (H) handelt es sich um Verbindungen, die unterschiedlich sind zu den Komponenten (A) bis (G), bevorzugt um Antioxidantien, UV-Stabilisatoren, wie z.B. sog. HALS-Verbindungen, Fungizide, handelsübliche Entschäumer, z.B. der Firma BYK (D-Wesel), handelsübliche Netzmittel, z.B. der Firma BYK (D-Wese1) und Pigmente .

Falls die erfindungsgemäßen Massen Additive (H) enthalten, handelt es sich um Mengen von vorzugsweise 0,01 bis 30 Gewichtsteilen, besonders bevorzugt 0,1 bis 10 Gewichtsteilen, jeweils bezogen auf 100 Gewichtsteile Bestandteil (A), Die erfindungsgemäßen Massen enthalten bevorzugt Additive (H).

Bei den erfindungsgemäß gegebenenfalls eingesetzten Zuschlagsstoffen (I), die unterschiedlich zu Komponente (H) sind, handelt es sich bevorzugt um Reaktivweichmacher, Rheologieadditive, Flammschutzmittel und organische Lösungsmittel.

Bevorzugte Reaktivweichmacher (I) sind Silane, die Alkylketten mit 6 bis 40 Kohlenstoffatome enthalten und eine gegenüber den Verbindungen (A) reaktive Gruppe besitzen. Beispiele sind Isooctyltrimethoxysilan, Isooctyltriethoxysilan, N-Octyltrimethoxysilan, N-Octyltriethoxysilan, Decyltrimethoxysilan, Decyltriethoxysilan, Dodecyltrimethoxysilan, Dodecyltriethoxysilan, Tetradecyltrimethoxysilan, Tetradecyltriethoxysilan, Hexadecyltrimethoxysilan sowie Hexadecyltriethoxysilan.

Bei den Rheologieadditiven (I) handelt es sich bevorzugt um bei Raumtemperatur und einem Druck von 1013 hPa feste Verbindungen, bevorzugt um Polyamidwachse, hydrierte Rizinusöle oder Stearate.

Als Flammschutzmittel (I) können alle typischen Flammschutzmittel eingesetzt werden, wie sie für Kleb- und Dichtstoffsysteme typisch sind, insbesondere halogenierte Verbindungen und Derivate.

Beispiele für organische Lösungsmittel (I) sind die bereits oben als Lösungsmittel (BL) genannten Verbindungen, bevorzugt Alkohole.

Den erfindungsgemäßen Massen werden vorzugsweise keine organischen Lösungsmittel (I) zugesetzt.

Falls die erfindungsgemäßen Massen eine oder mehrere Komponenten (I) enthalten, handelt es sich jeweils um Mengen von bevorzugt 0,5 bis 200 Gewichtsteilen, besonders bevorzugt 1 bis 100 Gewichtsteilen, insbesondere 2 bis 70 Gewichtsteilen, jeweils bezogen auf 100 Gewichtsteile Komponente (A).

Bei den erfindungsgemäßen Massen handelt es sich bevorzugt um solche enthaltend
(A) 100 Gewichtsteile Verbindungen der Formel (I),
(B) 5-60 Gewichtsteile Siliconharze enthaltend Einheiten der Formel (II), wobei es sich vorzugsweise um Harze (B1) handelt,
(C1) Katalysator ausgewählt aus metallhaltigen Härtungskatalysatoren, Guanidinen und Amidinen,
(C2) Cokatalysator enthaltend Einheiten der Formel (III),
mit der Maßgabe, dass das Molverhältnis von Verbindungen (C1) zu Resten D in Verbindungen (C2) 1:1 bis 1:200 beträgt und die vernetzbaren Massen Komponenten (C1) und (C2) in einer Gesamtmenge von 0,2 bis 50 Gewichtsteilen, bezogen auf 100 Gewichtsteile Komponente (A), enthalten,
   gegebenenfalls
(D) Weichmacher
   gegebenenfalls
(E) Füllstoffe,
   gegebenenfalls
(F) Haftvermittler,
   gegebenenfalls
(G) Wasserfänger,
   gegebenenfalls
(H) Additive und
   gegebenenfalls
(I) Zuschlagstoffe.

Besonders bevorzugt handelt es sich bei den erfindungsgemäßen Massen um solche enthaltend
(A) 100 Gewichtsteile Verbindungen der Formel (I),
(B) 5-60 Gewichtsteile Siliconharze bestehend aus Einheiten der Formel (II), wobei es sich vorzugsweise um Harze (B1) handelt,
(C1) Katalysator ausgewählt aus metallhaltigen Härtungskatalysatoren, Guanidinen und Amidinen,
(C2) Cokatalysator bestehend aus Einheiten der Formel (III), mit der Maßgabe, dass das Molverhältnis von Verbindungen (C1) zu Resten D in Verbindungen (C2) 1:2 bis 1:200 beträgt und die vernetzbaren Massen Komponenten (C1) und (C2) in einer Gesamtmenge von 0,3 bis 35 Gewichtsteilen, bezogen auf 100 Gewichtsteile Komponente (A), enthalten,
(D) 5 bis 300 Gewichtsteile Weichmacher,
   gegebenenfalls
(E) Füllstoffe,
   gegebenenfalls
(F) Haftvermittler,
   gegebenenfalls
(G) Wasserfänger,
   gegebenenfalls
(H) Additive und gegebenenfalls
(I) Zuschlagstoffe.

Ganz besonders bevorzugt handelt es sich bei den erfindungsgemäßen Massen um solche enthaltend
(A) 100 Gewichtsteile Verbindungen der Formel (I),
(B) 5-60 Gewichtsteile Siliconharze bestehend aus Einheiten der Formel (II), wobei es sich vorzugsweise um Harze (B1) handelt,
(C1) Katalysator ausgewählt aus metallhaltigen Härtungskatalysatoren, Guanidinen und Amidinen,
(C2) Cokatalysator bestehend aus Einheiten der Formel (III), mit der Maßgabe, dass das Molverhältnis von Verbindungen (C1) zu Resten D in Verbindungen (C2) 1:2 bis 1:200 beträgt und die vernetzbaren Massen Komponenten (C1) und (C2) in einer Gesamtmenge von 0,3 bis 35 Gewichtsteilen, bezogen auf 100 Gewichtsteile Komponente (A), enthalten,
(D) 5 bis 300 Gewichtsteile Weichmacher,
(E) 40 bis 1000 Gewichtsteile Füllstoffe,
   gegebenenfalls
(F) Haftvermittler,
   gegebenenfalls
(G) Wasserfänger,
   gegebenenfalls
(H) Additive und
   gegebenenfalls
(I) Zuschlagstoffe.

Ganz besonders bevorzugt handelt es sich bei den erfindungsgemäßen Massen um
solche enthaltend
(A) 100 Gewichtsteile Verbindungen der Formel (I), bei denen Y für einen Polypropylenoxidrest steht,
(B) 10-50 Gewichtsteile Siliconharze (B1) bestehend aus Einheiten der Formel (II),
(C1) Katalysator ausgewählt aus zinnhaltigen Verbindungen,
(C2) Cokatalysator bestehend aus Einheiten der Formel (III), mit der Maßgabe, dass das Molverhältnis von Verbindungen (C1) zu Resten D in Verbindungen (C2) 1:2 bis 1:200 beträgt und die vernetzbaren Massen Komponenten (C1) und (C2) in einer Gesamtmenge von 0,3 bis 35 Gewichtsteilen, bezogen auf 100 Gewichtsteile Komponente (A), enthalten,
(D) 30-150 Gewichtsteile Weichmacher,
(E) 60 bis 500 Gewichtsteile Füllstoffe,
   gegebenenfalls
(F) Haftvermittler,
(G) 0,5 bis 30 Gewichtsteile Wasserfänger,
(H) 0,1 bis 10 Gewichtsteile Additive, ausgewählt aus Antioxidantien und UV-Stabilisatoren, und
   gegebenenfalls
(I) Zuschlagstoffe.

Die erfindungsgemäßen Massen enthalten außer den genannten Komponenten (A) bis (I) vorzugsweise keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bei den erfindungsgemäßen Massen handelt es sich bevorzugt um zähflüssig bis pastöse Massen mit Viskositäten von bevorzugt 500 bis 3 000 000 mPas, besonders bevorzugt von 1 500 bis 1 500 000 mPas, jeweils bei 25°C.

Die Herstellung der erfindungsgemäßen Massen kann nach beliebiger und an sich bekannter Art und Weise erfolgen, wie etwa nach Methoden und Mischverfahren, wie sie zur Herstellung von feuchtigkeitshärtenden Zusammensetzungen üblich sind. Die Reihenfolge, in der die verschiedenen Bestandteile miteinander vermischt werden, kann dabei beliebig variiert werden.

Ein weiterer Gegenstand der vorliegenden Erfindung ist ein Verfahren zur Herstellung der erfindungsgemäßen Zusammensetzung durch Mischen der einzelnen Komponenten in beliebiger Reihenfolge.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen erfolgt bevorzugt unter Ausschluss von Feuchtigkeit.

Das erfindungsgemäße Verfahren kann kontinuierlich oder diskontinuierlich durchgeführt werden.

Bei den erfindungsgemäßen Massen handelt es sich bevorzugt um einkomponentige vernetzbare Massen. Die erfindungsgemäßen Massen können aber auch Teil von zweikomponentigen Vernetzungssystemen sein, bei denen in einer zweiten Komponente OH-haltige Verbindungen, wie Wasser, hinzugefügt werden.

Die erfindungsgemäßen Massen sind bei Ausschluss von Wasser lagerfähig und bei Zutritt von Wasser vernetzbar.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Massen.

Vorzugsweise haben die erfindungsgemäßen Formkörper eine Reißfestigkeit von mindestens 1 MPa, besonders bevorzugt von mindestens 1,5 MPa, insbesondere von mindestens 2 MPa, jeweils gemessen nach DIN EN 53504.

Bei den erfindungsgemäßen Formkörpern kann es sich um beliebige Formkörper handeln, wie etwa Dichtungen, Pressartikel, extrudierte Profile, Beschichtungen, Imprägnierungen, Verguss, Linsen, Prismen, polygone Strukturen, Laminat- oder Klebschichten.

Ein weiterer Gegenstand der Erfindung ist ein Verfahren zur Herstellung von Materialverbunden, bei denen die erfindungsgemäße Masse auf mindestens ein Substrat aufgebracht und anschließend vernetzen gelassen wird.

Beispiele hierfür sind Beschichtungen, Verguss, die Herstellung von Formartikeln, Verbundmaterialien und Verbundformteile. Unter Verbundformteilen soll hier ein einheitlicher Formartikel aus einem Verbundmaterial verstanden werden, der aus einem Vernetzungsprodukt der erfindungsgemäßen Massen und mindestens einem Substrat so zusammengesetzt ist, dass zwischen den beiden Teilen eine feste, dauerhafte Verbindung besteht.

Beim erfindungsgemäßen Verfahren zur Herstellung von Materialverbunden kann die erfindungsgemäße Masse auch zwischen mindestens zwei gleichen oder verschiedenen Substraten vulkanisiert werden, wie z.B. bei Verklebungen, Laminaten oder Einkapselungen.

Beispiele für Substrate, die erfindungsgemäß verklebt oder abgedichtet werden können, sind Kunststoffe inkl. PVC, Beton, Holz, mineralische Untergründe, Metalle, Glas, Keramik und lackierte Oberflächen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, zur Abdichtung von Flächen, z.B. von Dächern, Wänden oder Böden, oder als Klebstoffe oder Verkittungsmassen, z.B. im Fensterbau oder bei der Herstellung von Vitrinen, sowie z.B. zur Herstellung von Schutzüberzügen, oder das Gleiten verhindernden Überzügen, oder von gummielastischen Formkörpern sowie für die Isolierung von elektrischen oder elektronischen Vorrichtungen.

Die erfindungsgemäßen Massen haben den Vorteil, dass sie leicht herzustellen sind.

Die erfindungsgemäßen vernetzbaren Massen haben den Vorteil, dass sie sich durch eine sehr hohe Lagerstabilität und eine hohe Vernetzungsgeschwindigkeit auszeichnen.

Ferner haben die erfindungsgemäßen vernetzbaren Massen den Vorteil, dass sie ein ausgezeichnetes Haftungsprofil aufweisen.

Des Weiteren haben die erfindungsgemäßen vernetzbaren Massen den Vorteil, dass sie leicht zu verarbeiten sind.

Sofern nicht anders angegeben, werden sämtliche Arbeitsschritte in den nachstehenden Beispielen bei einem Druck der umgebenden Atmosphäre, also etwa bei 1013 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt. Die Vernetzung der Massen wird bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiel 1

In einem 2 l-Vierhalskolben mit Tropftrichter, Liebigkühler, KPG-Rührer und Thermometer werden 1000 g Phenyltrimethoxysilan bei Raumtemperatur vorgelegt und unter Rührung mit 20 g einer 20%-igen wässrigen Salzsäure versetzt. Anschließend wird auf eine Temperatur von 65-68°C erwärmt, bis ein schwacher Rückfluss einsetzt. Dann wird unter Rückfluss eine Mischung aus 74 g Wasser und 40 g Methanol gleichmäßig innerhalb von 30 min zugegeben. Nach Ende der Zugabe wird für weitere 10 min unter Rückfluss gerührt und danach auf Raumtemperatur abgekühlt.

Die Reaktionsmischung wird für ca. 16 h bei Raumtemperatur stehen gelassen, anschließend werden 60 g Natriumhydrogencarbonat unter Rührung zugeben, es wird für 30 min gerührt, dann wird der entstandene Feststoff durch Filtration abgetrennt. Zuletzt werden die Leichtsieder (im Wesentlichen Methanol) destillativ entfernt. Dabei werden zunächst ca. 80-90% der abzunehmenden Destillatmenge bei 1013 mbar und einer Temperatur von 120°C entfernt, anschließend wird der Druck auf 10 mbar reduziert und während der folgenden 15-20 min werden die verbleibenden leichtsiedenden Reste abdestilliert.

Es wird ein Phenylsiliconharz mit einer mittleren Molmasse Mn von 1200 g/mol, einer Viskosität von 30 mPas bei 23 °C und einem Gehalt an Methoxygruppen von 18% bezogen auf die gesamte Harzmasse erhalten.

### Beispiel 2

Es wird so vorgegangen wie in Beispiel 1. Allerdings werden die Einsatzstoffe und -mengen wie folgt variiert.

Statt 1000 g Phenyltrimethoxysilan wird eine Mischung aus 700 g Phenyltrimethoxysilan und 300 g Methyltrimethoxysilan vorgelegt. Und nach der unverändert gebliebenen Salzsäurezugabe und der Erwärmung auf eine Temperatur von 65-68°C wird statt einer Mischung aus 74 g Wasser und 40 g Methanol eine Mischung aus 92,5 g Wasser und 62 g Methanol unter Rückfluss gleichmäßig innerhalb von 30 min zugegeben. Alle anderen Verfahrensparameter, Einsatzstoffe und -mengen bleiben unverändert.

Es wird ein Phenyl-Methyl-Siliconharz mit einer mittleren Molmasse Mn von 1100 g/mol, einer Viskosität von 30 mPas bei 23 °C und einem Gehalt an Methoxygruppen von 19% bezogen auf die gesamte Harzmasse erhalten.

### Beispiel 3

### Herstellung einer erfindungsgemäßen Klebstoffformulierung

85,6 g silanterminiertes Polypropylenglycol mit einer mittleren Molmasse (Mₙ) von 18000 g/mol und 2 Endgruppen der Formel -O-C(=O)-NH-(CH₂)₃-Si(OCH₃)₃ (käuflich erhältlich unter der Bezeichnung GENIOSIL^{®} STP-E35 bei der Fa. Wacker Chemie AG, D-München) und 59,2 g eines Polypropylenglycols mit einer mittleren Molmasse Mₙ von 2000 g/mol werden vermischt und in einem Laborplanetenmischer der Fa. PC-Laborsystem, ausgestattet mit zwei Balkenmischern, bei ca. 25°C mit 8,0 g Vinyltrimethoxysilan, 54,4 g eines Harzes hergestellt nach Beispiel 1 und 2,0 g einer Stabilisatormischung (unter der Bezeichnung TINUVIN^{®} B 75 bei der Fa. BASF AG (Deutschland) käuflich erhältliche Mischung aus 20% Irganox^{®} 1135 (CAS-Nr. 125643-61-0), 40 % Tinuvin^{®} 571 (CAS-NR. 23328-53-2) und 40 % Tinuvin^{®} 765 (CAS-NR. 41556-26-7)) für 2 Minuten bei 200 U/min homogenisiert. Danach werden 186,0 g einer mit Fettsäure beschichteten gefällten Kreide mit einem mittleren Teilchendurchmesser (D50%) von ca. 0,07 µm (käuflich erhältlich unter der Bezeichnung Hakuenka^{®} CCR S10 bei der Fa. Shiraishi Omya GmbH, AT-Gummern) unter Rühren eine Minute bei 600 U/min aufgeschlossen. Nach Einarbeitung der Kreide werden 4 g Aminopropyl-trimethoxysilan und 0,8 g Dioctylzinndilaurat für 1 Minute bei 200 U/min eingemischt. Schließlich wird für 2 Minuten bei 600 U/min und für 1 Minute bei 200 U/min beim Druck von ca. 100 mbar homogenisiert und blasenfrei gerührt.

Die so erhaltene Masse wird in 310 ml PE-Kartuschen abgefüllt, luftdicht verschlossen und 24 Stunden bei 20°C vor der Untersuchung gelagert.

### Beispiel 4

### Herstellung einer erfindungsgemäßen Klebstoffformulierung

Es wird vorgegangen wie in Beispiel 3 beschrieben. Allerdings werden die in Beispiel 3 angegebenen Einsatzmengen für GENIOSIL^{®} STP-E35 und das Phenylsiliconharz hergestellt nach Beispiel 1 variiert.

So werden hier 103,6 g GENIOSIL^{®} STP-E35 und 36,4 g eines Harzes hergestellt nach Beispiel 1 eingesetzt. Die Einsatzmengen aller übrigen Rohstoffe bleiben unverändert.

Die so erhaltene Masse wird in 310 ml PE-Kartuschen abgefüllt, luftdicht verschlossen und 24 Stunden bei 20°C vor der Untersuchung gelagert.

### Beispiel 5

### Herstellung einer erfindungsgemäßen Klebstoffformulierung

Es wird vorgegangen wie in Beispiel 3 beschrieben. Allerdings werden die in Beispiel 3 angegebenen Einsatzmengen für GENIOSIL^{®} STP-E35 und das Phenylsiliconharz hergestellt nach Beispiel 1 variiert.

So werden hier 122,0 g GENIOSIL^{®} STP-E35 und 18,0 g eines lösungsmittelfreien Harzes hergestellt nach Beispiel 1 eingesetzt. Die Einsatzmengen aller übrigen Rohstoffe bleiben unverändert.

Die so erhaltene Masse wird in 310 ml PE-Kartuschen abgefüllt, luftdicht verschlossen und 24 Stunden bei 20°C vor der Untersuchung gelagert.

### Vergleichsbeispiel 1

### Herstellung einer nicht erfindungsgemäßen Klebstoffformulierung

Es wird vorgegangen wie in Beispiel 3 beschrieben. Allerdings wird auf die Zugabe des Phenylsiliconharzes hergestellt nach Beispiel 1 verzichtet. Stattdessen werden 140 g statt 85,6 g GENIOSIL^{®} STP-E35 eingesetzt.

Die so erhaltene Masse wird in 310 ml PE-Kartuschen abgefüllt, luftdicht verschlossen und 24 Stunden bei 20°C vor der Untersuchung gelagert.

### Vergleichsbeispiel 2

### Herstellung einer nicht erfindungsgemäßen Klebstoffformulierung

Es wird vorgegangen wie in Beispiel 3 beschrieben. Allerdings wird auf die Zugabe von Dioctylzinndilaurat verzichtet. Dafür wird die Einsatzmenge des Polypropylenglycols mit einer mittleren Molmasse Mₙ von 2000 geringfügig von 59,2 g auf 60 g erhöht. Die Einsatzmengen aller übrigen Rohstoffe bleiben unverändert.

### Beispiel 6

Die in den Beispielen 3 bis 5 sowie in den Vergleichsbeispielen 1 und 2 (V1 und V2) erhaltenen Massen werden vernetzen gelassen und hinsichtlich ihrer Hautbildung und ihrer mechanischen Eigenschaften untersucht. Die Ergebnisse finden sich in Tabelle 1.

### Hautbildungszeit (HBZ)

Zur Bestimmung der Hautbildungszeit werden die in den Beispielen erhaltenen vernetzbaren Massen in einer 2 mm dicken Schicht auf PE-Folie aufgetragen und bei Normklima (23°C und 50% relative Luftfeuchtigkeit) gelagert. Während des Aushärtens wird alle 5 min die Bildung einer Haut getestet. Dazu wird ein trockener Laborspatel vorsichtig auf die Oberfläche der Probe aufgesetzt und nach oben gezogen. Bleibt Probe am Finger kleben, hat sich noch keine Haut gebildet. Bleibt keine Probe am Finger mehr kleben, so hat sich eine Haut gebildet und die Zeit wird notiert.

### Mechanische Eigenschaften

Die Massen wurden jeweils auf ausgefrästen Teflonplatten mit 2 mm Tiefe ausgestrichen und 2 Wochen bei 23°C, 50 % rel. Luftfeuchte gehärtet.

Shore-A-Härte wird gemäß DIN 53505 bestimmt.

Reißfestigkeit wird gemäß DIN 53504-S1 bestimmt.

Reißdehnung wird gemäß DIN 53504-S1 bestimmt.

**Tabelle 1**

| **Masse aus Beispiel** | **3** | **4** | **5** | **V1** | **V2** |
|---|---|---|---|---|---|
| Verhältnis Komponente (B) zu Komponente (A) | 0,63 | 0,35 | 0,15 | 0,00 | 0,63 |
| Katalysatormischung aus (C1) und (C2) | ja | ja | ja | ja | nein |
| Hautbildungszeit [min] | 126 | 94 | 36 | 8 | >1000 |
| Shore-A-Härte | 63 | 54 | 50 | 50 | n.b. |
| Reißfestigkeit [N/mm²] | 4,5 | 5, 6 | 4, 1 | 3,2 | n.b. |
| Reißdehnung [%] | 612 | 748 | 680 | 418 | n.b. |

| | | | | | |
|---|---|---|---|---|---|
| n.b.: nicht bestimmbar | | | | | |

Der Vergleich der Beispiele 3, 4, 5 und V1 zeigt, dass die erfindungsgemäßen Systeme, die Phenylsiliconharze (Komponente (B)) enthalten, nicht nur deutlich bessere Reißfestigkeiten, sondern überraschenderweise auch eine wesentlich bessere Reißdehnungen aufweisen als nicht erfindungsgemäße Massen ohne Komponente (B).

Gleichzeitig zeigt ein Vergleich derselben Beispiele, dass die Hautbildungszeit durch den Zusatz Phenylsiliconharze (Komponente (B)) überraschenderweise deutlich verlängert wird. Ohne den kombinierten Einsatz der Komponenten (C1) und (C2) können keine praxisrelevanten Härtungszeiten erreicht werden (vgl. Vergleichsbeispiel 2).

### Beispiel 7

### Herstellung einer erfindungsgemäßen Klebstoffformulierung

160,0 g silanterminiertes Polypropylenglycol mit einer mittleren Molmasse (Mₙ) von 18000 g/mol und 2 Endgruppen der Formel - O-C(=O)-NH-(CH₂)₃-Si(OCH₃)₃ (käuflich erhältlich unter der Bezeichnung GENIOSIL^{®} STP-E35 bei der Fa. Wacker Chemie AG, D-München) werden in einem Laborplanetenmischer der Fa. PC-Laborsystem, ausgestattet mit zwei Balkenmischern, bei ca. 25°C mit 42,0 g eines lösungsmittelfreien Harzes hergestellt nach Beispiel 1 und 2,0 g einer Stabilisatormischung (käuflich erhältlich unter der Bezeichnung TINUVIN^{®} B 75 bei der Fa. BASF AG, Deutschland) für 2 Minuten bei 200 U/min homogenisiert. Danach werden 189,6 g Aluminiumtrihydroxid mit einer BET-Oberfläche von 3-5 m²/g und einem d50-Wert von 1,7-2,1 µm (käuflich erhältlich unter der Bezeichnung Martinal^{®} OL 104 bei der Fa. Albemarle Corp.) unter Rühren eine Minute bei 600 U/min aufgeschlossen. Nach Einarbeitung des Füllstoffes werden 6 g Aminopropyl-trimethoxysilan und 0,4 g Dioctylzinndilaurat für 1 Minute bei 200 U/min eingemischt. Schließlich wird für 2 Minuten bei 600 U/min und für 1 Minute bei 200 U/min beim Druck von ca. 100 mbar homogenisiert und blasenfrei gerührt.

Die so erhaltene Masse wird in 310 ml PE-Kartuschen abgefüllt, luftdicht verschlossen und 24 Stunden bei 20°C vor der Untersuchung gelagert.

### Beispiel 8

### Herstellung einer erfindungsgemäßen Klebstoffformulierung

Es wird vorgegangen wie in Beispiel 7 beschrieben. Allerdings werden anstelle von 0,4 g Dioctylzinndilaurat 0,4 g 1,8-Diaza-bicyclo[5.4.0]undec-7-en (DBU, käuflich erhältlich unter der Bezeichnung Lupragen^{®} N 700 bei der Fa. BASF AG, Deutschland) eingesetzt.

Die so erhaltene Masse wird in 310 ml PE-Kartuschen abgefüllt, luftdicht verschlossen und 24 Stunden bei 20°C vor der Untersuchung gelagert.

### Beispiel 9

### Herstellung einer erfindungsgemäßen Klebstoffformulierung

Es wird vorgegangen wie in Beispiel 7 beschrieben. Allerdings werden anstelle von 0,4 g Dioctylzinndilaurat 0,4 g Diisopropoxytitan-Ethylacetoacetat (käuflich erhältlich unter der Beeich-nung "Tyzor^{®} IBAY" bei der Fa. Dorf Ketal Chemicals Pvt. Ltd., Stafford, USA) eingesetzt.

Die so erhaltene Masse wird in 310 ml PE-Kartuschen abgefüllt, luftdicht verschlossen und 24 Stunden bei 20°C vor der Untersu-chung gelagert.

### Vergleichsbeispiel 3

### Herstellung einer nicht erfindungsgemäßen Klebstoffformulierung

Es wird vorgegangen wie in Beispiel 7 beschrieben. Allerdings wird auf den Zusatz von 0,4 g Dioctylzinndilaurat ersatzlos verzichtet.

Die so erhaltene Masse wird in 310 ml PE-Kartuschen abgefüllt, luftdicht verschlossen und 24 Stunden bei 20°C vor der Untersu-chung gelagert.

### Beispiel 10

Die im Beispielen 7 bis 9 sowie im Vergleichsbeispiel 3 (V3) erhaltenen Massen werden vernetzen gelassen und hinsichtlich ihrer Hautbildung und ihrer mechanischen Eigenschaften untersucht. Die Ergebnisse finden sich in Tabelle 2.

### Hautbildungszeit (HBZ)

Die Hautbildungszeit wird bestimmt, wie in Beispiel 6 beschrieben.

### Mechanische Eigenschaften

Die Bestimmung der Zugscherfestigkeiten erfolgt wie in der DIN EN 204 beschrieben. Hierbei Bei der Bestimmung der Zugscherfestigkeiten erfolgt ein Auftrag der jeweiligen Masse auf beide zu verklebenden Buchenhölzer, welche dann mit einem 100 um Rakel abgezogen werden. Anschließend erfolgt das Verbinden der beiden Hölzer über eine Fläche von 1 mal 2 cm mit einem Anpressdruck von 5kg. Nach dem Anpressen von 24 Stunden werden die Hölzer bei Normalklima gelagert. Bei der Bestimmung des D1-Wertes beträgt die Lagerdauer 7 Tage. Anschließend wird die Zugscherfestigkeit der beiden verklebten Hölzer direkt gemessen. Bei der D4-Messung beträgt die Lagerdauer im Normklima 21 Tage und anschließend erfolgt eine zusätzliche Lagerung für sechs Stunden im Kochwasser. Anschließend werden die Hölzer aus dem Wasser herausgenommen, abgetrocknet und eine Stunde bei Raumtemperatur gelagert. Danach erfolgt die Bestimmung der Zugscherfestigkeit.

**Tabelle 2**

| **Masse aus Beispiel** | **7** | **8** | **9** | **V3** |
|---|---|---|---|---|
| HBZ [min] | 97 | 60 | 336 | 1165 |
| D1-Messung [MPa] | 5,7 | 5,1 | 5,4 | 3,8 |
| D4-Messung [MPa] | 2,3 | 2,1 | 2,0 | 1,6 |

### Beispiel 11

### Herstellung einer erfindungsgemäßen Klebstoffformulierung

Es wird vorgegangen wie in Beispiel 5 beschrieben. Allerdings werden anstelle von 18 g Phenylsiliconharz hergestellt nach Beispiel 1, 18 g Phenyl-Methyl-Siliconharz hergestellt nach Beispiel 2 eingesetzt. Alle anderen Prozessparameter, Einsatzstoffe und -mengen bleiben unverändert.

Die so erhaltene Masse wird in 310 ml PE-Kartuschen abgefüllt, luftdicht verschlossen und 24 Stunden bei 20°C vor der Untersuchung gelagert.

Bei der Bestimmung von Hautbildungszeit und mechanischen Eigenschaften entsprechend der in Beispiel 6 beschriebenen Vorgehensweise werden die folgenden Werte ermittelt.

| | |
|---|---|
| Hautbildungszeit: | 21 min |
| Shore-A-Härte: | 49 |
| Reißfestigkeit: | 3,6 N/mm² |
| Reißdehnung: | 486% |

## Patentansprüche

1. Vernetzbare Massen enthaltend
(A) 100 Gewichtsteile Verbindungen der Formel
Y-[(CR¹₂)₃-SiRₐ(OR²)₃₋ₐ]_{b} (I),
wobei
Y einen Polyurethanreste oder Polyoxyalkylenreste bedeutet,
R gleich oder verschieden sein kann und einen einwertigen, gegebenenfalls substituierten Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
b eine ganze Zahl von 1 bis 10, bevorzugt 1, 2 oder 3, besonders bevorzugt 1 oder 2, ist, und
a gleich oder verschieden sein kann und 0, 1 oder 2, bevorzugt 0 oder 1, ist,
(B) mindestens 15 und höchstens 50 Gewichtsteile Siliconharze ausschließlich aus Einheiten der Formel
R³_{c}(R⁴O)_{d}R⁵ₑSiO_{(4-c-d-e)/2} (II),
wobei
R³ gleich oder verschieden sein kann und Wasserstoffatom, einen einwertigen, SiC-gebundenen, gegebenenfalls substituierten aliphatischen Kohlenwasserstoffrest oder einen zweiwertigen, gegebenenfalls substituierten, aliphatischen Kohlenwasserstoffrest, der zwei Einheiten der Formel (II) verbrückt, bedeutet,
R⁴ gleich oder verschieden sein kann und Wasserstoffatom oder einen einwertigen, gegebenenfalls substituierten Kohlenwasserstoffrest bedeutet,
R⁵ gleich oder verschieden sein kann und einen einwertigen, SiC-gebundenen, gegebenenfalls substituierten aromatischen Kohlenwasserstoffrest bedeutet,
c 0, 1, 2 oder 3 ist,
d 0, 1, 2 oder 3, bevorzugt 0, 1 oder 2, besonders bevorzugt 0 oder 1, ist und
e 0, 1 oder 2, bevorzugt 0 oder 1, ist,
mit der Maßgabe, dass
die Summe aus c+d+e kleiner oder gleich 3 ist und in mindestens 40 % der Einheiten der Formel (II) die Summe c+e gleich 0 oder 1 ist,
**dadurch gekennzeichnet, dass** als Komponente (B) Siliconharze (B1) eingesetzt werden, die, jeweils bezogen auf die Gesamtzahl an Einheiten der Formel (II), mindestens 20% Einheiten der Formel (II) aufweisen, in denen e für den Wert 1 steht.
(C1) Katalysator ausgewählt aus metallhaltigen Härtungskatalysatoren, Guanidinen und Amidinen, und
(C2) Cokatalysator enthaltend Einheiten der Formel
DₕSi(OR⁷)_{g}R⁶_{f}O_{(4-f-g-h)/2} (III),
worin
R⁶ gleich oder verschieden sein kann und einen einwertigen, gegebenenfalls substituierten SiC-gebundenen, von Stickstoff freien organischen Rest bedeutet,
R⁷ gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest mit mindestens einem nicht an eine Carbonylgruppe (C=O) gebundenen Stickstoffatom bedeutet,
f 0, 1, 2 oder 3, bevorzugt 1, ist,
g 0, 1, 2 oder 3, bevorzugt 1, 2 oder 3, besonders bevorzugt 1 oder 3, ist und
h 0, 1, 2, 3 oder 4, bevorzugt 1, ist,
mit der Maßgabe, dass die Summe aus f+g+h kleiner oder gleich 4 ist und pro Molekül mindestens ein Rest D anwesend ist,
wobei das Molverhältnis von Verbindungen (C1) zu Resten D in Verbindungen (C2) 1:1 bis 1:400 beträgt und die vernetzbaren Massen Komponenten (C1) und (C2) in einer Gesamtmenge von 0,2 bis 50 Gewichtsteilen bezogen auf 100 Gewichtsteile Komponente (A) enthalten.

2. Vernetzbare Massen gemäß Anspruch 1, **dadurch gekennzeichnet, dass** Weichmacher (D) in Mengen von 5 bis 300 Gewichtsteilen enthalten sind, bezogen auf 100 Gewichtsteile Komponente (A).

3. Vernetzbare Massen gemäß einem der Ansprüche 1 oder 2, **dadurch gekennzeichnet, dass** es sich bei den Katalysatoren (C1) um zinnhaltige Verbindungen handelt.

4. Vernetzbare Massen gemäß einem oder mehreren der Ansprüche 1 bis 3, **dadurch gekennzeichnet, dass** das Molverhältnis der Verbindungen (C1) zu Resten D in Verbindung (C2) 1:2 bis 1:200 beträgt.

5. Verfahren zur Herstellung der Masse gemäß einem oder mehreren der Ansprüche 1 bis 4 durch Mischen der einzelnen Komponenten in beliebiger Reihenfolge.

6. Formkörper, hergestellt durch Vernetzung der Massen gemäß einem oder mehreren der Ansprüche 1 bis 4.

7. Verfahren zur Herstellung von Materialverbunden, bei denen die Masse gemäß einem oder mehreren der Ansprüche 1 bis 4 auf mindestens ein Substrat aufgebracht und anschließend vernetzen gelassen wird.

## Claims

1. Crosslinkable compositions comprising
(A) 100 parts by weight of compounds of formula
Y-[(CR¹₂)₃-SiRₐ(OR²)₃₋ₐ]_{b} (I),
where
Y is a polyurethane radical or polyoxyalkylene radical,
R may be identical or different and is a monovalent, optionally substituted hydrocarbon radical,
R¹ may be identical or different and is hydrogen atom or a monovalent optionally substituted hydrocarbon radical, which may be attached via nitrogen, phosphorus, oxygen, sulfur or carbonyl group to the carbon atom,
R² may be identical or different and is hydrogen atom or a monovalent, optionally substituted hydrocarbon radical,
b is an integer from 1 to 10, preferably 1, 2 or 3, more preferably 1 or 2, and
a may be identical or different and is 0, 1 or 2, preferably 0 or 1,
(B) at least 15 and at most 50 parts by weight of silicone resins composed exclusively of units of the formula
R³_{c}(R⁴O)_{d}R⁵ₑSiO_{(4-c-d-e)/2} (II),
where
R³ may be identical or different and is hydrogen atom, a monovalent, SiC-bonded, optionally substituted aliphatic hydrocarbon radical or a divalent, optionally substituted, aliphatic hydrocarbon radical which bridges two units of the formula (II),
R⁴ may be identical or different and is hydrogen atom or a monovalent, optionally substituted hydrocarbon radical,
R⁵ may be identical or different and is a monovalent, SiC-bonded, optionally substituted aromatic hydrocarbon radical,
c is 0, 1, 2 or 3,
d is 0, 1, 2 or 3, preferably 0, 1 or 2, more preferably 0 or 1, and
e is 0, 1 or 2, preferably 0 or 1,
with the proviso that
the sum of c+d+e is less than or equal to 3 and in at least 40% of the units of the formula (II) the sum c+e is 0 or 1,
**characterized in that** use is made as component (B) of silicone resins (B1) which, based in each case on the total number of units of the formula (II), have at least 20% of units of the formula (II) in which e is 1,
(C1) catalyst selected from metal-containing curing catalysts, guanidines, and amidines, and
(C2) cocatalyst comprising units of the formula
DₕSi(OR⁷)_{g}R⁶_{f}O_{(4-f-g-h)/2} (III),
in which
R⁶ may be identical or different and is a monovalent, optionally substituted SiC-bonded, nitrogen-free organic radical,
R⁷ may be identical or different and is hydrogen atom or optionally substituted hydrocarbon radicals,
D may be identical or different and is a monovalent, SiC-bonded radical having at least one nitrogen atom not bonded to a carbonyl group (C=O),
f is 0, 1, 2 or 3, preferably 1,
g is 0, 1, 2 or 3, preferably 1, 2 or 3, more preferably 1 or 3, and
h is 0, 1, 2, 3 or 4, preferably 1,
with the proviso that the sum of f+g+h is less than or equal to 4 and per molecule there is at least one radical D present,
where the molar ratio of compounds (C1) to radicals D in compounds (C2) is 1:1 to 1:400 and the crosslinkable compositions comprise components (C1) and (C2) in a total amount of 0.2 to 50 parts by weight per 100 parts by weight of component (A).

2. Crosslinkable compositions according to Claim 1, **characterized in that** plasticizers (D) are present in amounts of 5 to 300 parts by weight per 100 parts by weight of component (A).

3. Crosslinkable compositions according to either of Claims 1 and 2, **characterized in that** the catalysts (C1) are tin-containing compounds.

4. Crosslinkable compositions according to one or more of Claims 1 to 3, **characterized in that** the molar ratio of the compounds (C1) to radicals D in compound (C2) is 1:2 to 1:200.

5. Process for producing the composition according to one or more of Claims 1 to 4 by mixing the individual components in any order.

6. Shaped article produced by crosslinking the compositions according to one or more of Claims 1 to 4.

7. Process for producing composite materials, wherein the composition according to one or more of Claims 1 to 4 is applied to at least one substrate and then allowed to crosslink.

## Revendications

1. Masses réticulables contenant
(A) 100 parties en poids de composés de formule
Y-[(CR¹₂)₃-SiRₐ(OR²)₃₋ₐ]_{b} (I),
dans laquelle
Y signifie un radical polyuréthane ou un radical polyoxyalkylène,
R peut être identique ou différent et représente un radical hydrocarboné monovalent, le cas échéant substitué,
R¹ peut être identique ou différent et représente un atome d'hydrogène ou un radical hydrocarboné monovalent, le cas échéant substitué, qui peut être lié à l'atome de carbone par l'intermédiaire d'azote, de phosphore, d'oxygène, de soufre ou d'un groupe carbonyle,
R² peut être identique ou différent et représente un atome d'hydrogène ou un radical hydrocarboné monovalent, le cas échéant substitué,
b vaut un nombre entier de 1 à 10, de préférence de 1, 2 ou 3, de manière particulièrement préférée 1 ou 2 et
a peut être identique ou différent et vaut 0, 1 ou 2, de préférence 0 ou 1,
(B) au moins 15 et au plus 50 parties en poids de résines de silicone, exclusivement constituées de motifs de formule
R³_{c}(R⁴O)_{d}R⁵ₑSiO_{(4-c-d-e)/2} (II),
dans laquelle
R³ peut être identique ou différent et signifie un atome d'hydrogène, un radical hydrocarboné monovalent, lié par SiC, le cas échéant substitué, aliphatique ou un radical hydrocarboné bivalent, le cas échéant substitué, aliphatique, qui ponte deux motifs de formule (II),
R⁴ peut être identique ou différent et signifie un atome d'hydrogène ou un radical hydrocarboné monovalent, le cas échéant substitué,
R⁵ peut être identique ou différent et signifie un radical hydrocarboné monovalent, lié par SiC, le cas échéant substitué, aromatique,
c vaut 0, 1, 2 ou 3,
d vaut 0, 1, 2 ou 3, de préférence 0, 1 ou 2, de manière particulièrement préférée 0 ou 1 et
e vaut 0, 1 ou 2, de préférence 0 ou 1,
étant entendu que
la somme de c + d + e est inférieure ou égale à 3 et, dans au moins 40% des motifs de formule (II), la somme de c + e vaut 0 ou 1,
**caractérisées en ce qu'**on utilise, comme composant (B), des résines siliconées (B1) qui, à chaque fois par rapport au nombre total de motifs de formule (II), présentent au moins 20% de motifs de formule (II), dans laquelle e vaut 1,
(C1) un catalyseur choisi parmi les catalyseurs de durcissement contenant un métal, les guanidines et les amidines et
(C2) un cocatalyseur contenant des motifs de formule
DₕSi(OR⁷)_{g}R⁶_{f}O_{(4-f-g-h)/2} (III),
dans laquelle
R⁶ peut être identique ou différent et signifie un radical organique monovalent, le cas échéant substitué, lié par SiC, exempt d'azote,
R⁷ peut être identique ou différent et signifie un atome d'hydrogène ou des radicaux hydrocarbonés le cas échéant substitués,
D peut être identique ou différent et signifie un radical monovalent lié par SiC, présentant au moins un atome d'azote non lié à un groupe carbonyle (C=O),
f vaut 0, 1, 2 ou 3, de préférence 1,
g vaut 0, 1, 2 ou 3, de préférence 1, 2 ou 3, de manière particulièrement préférée 1 ou 3 et
h vaut 0, 1, 2, 3 ou 4, de préférence 1,
étant entendu que la somme de f + g + h est inférieure ou égale à 4 et qu'il existe au moins un radical D par molécule,
le rapport molaire des composés (C1) aux radicaux D dans les composés (C2) valant 1:1 à 1:400 et les masses réticulables contenant les composants (C1) et (C2) en une quantité totale de 0,2 à 50 parties en poids par rapport à 100 parties en poids de composant (A).

2. Masses réticulables selon la revendication 1, **caractérisées en ce qu'**elles contiennent des plastifiants (D) en des quantités de 5 à 300 parties en poids, par rapport à 100 parties en poids de composant (A).

3. Masses réticulables selon l'une des revendications 1 ou 2, **caractérisées en ce qu'**il s'agit, pour les catalyseurs (C1), de composés contenant de l'étain.

4. Masses réticulables selon l'une ou plusieurs des revendications 1 à 3, **caractérisées en ce que** le rapport molaire des composés (C1) aux radicaux D dans le composé (C2) vaut 1:2 à 1:200.

5. Procédé pour la préparation des masses selon l'une ou plusieurs des revendications 1 à 4 par mélange des différents composants dans un ordre quelconque.

6. Corps façonnés, préparés par réticulation des masses selon l'une ou plusieurs des revendications 1 à 4.

7. Procédé de fabrication de composites de matériaux, dans lequel on applique la masse selon l'une ou plusieurs des revendications 1 à 4 sur au moins un substrat, puis on laisse réticuler.
